# EUROPEAN PATENT SPECIFICATION

(11) **EP 1 753 666 B1**
(45) Date of publication and mention of the grant of the patent: **07.05.2008**
(21) Application number: 05747663.2
(22) Date of filing: 24.05.2005
(51) Int. Cl.: B65D 19/42

(54) **TROLLEY BASE AND TROLLEY WITH THIS BASE**
WAGENBASIS UND WAGEN MIT DIESER BASIS
SUPPORT POUR CHARIOT ET CHARIOT AVEC UN TEL SUPPORT

(30) Priority: 25.05.2004 EP 04425376
(43) Date of publication of application: 21.02.2007
(73) Proprietor: Italfil S.n.c. di Guerra Walter & C., 25039 Travagliato (Brescia) (IT)
(72) Inventor: GUERRA, Mauro Roberto, c/o Italfil Snc di Guerra Walter&C., I-25039 Travagliato (IT)
(74) Representative: Crippa, Paolo Ernesto
(86) International application number: PCT/EP2005/052380
(87) International publication number: WO 2005/115853

(56) References cited:
- EP-A- 0 487 147
- DE-U- 20 001 147
- GB-A- 1 583 763
- GB-A- 2 280 166
- US-A- 4 822 066

## Description

The present invention relates to trolleys for storing merchandise and, more particularly, to a base for such trolleys.

Various types of trolleys are known for use in warehouses, supermarkets, airports, etc., substantially constituted by a base provided with wheels, with at least two side pieces that extend perpendicularly from the base and possibly with planes parallel to the base fixed to the side pieces. Some known trolleys are wholly realized in electrically welded steel wire, others are wholly realized in wood or rigid plastic material and yet others are realized with the use of said materials in different combinations, for example, the base may be of wood and the side pieces and the possible planes may be made of steel wire.

For example, EP-A-0487 147 discloses a pallet comprising a quadrangular base in plastic mould parts and two sides in the form of metal bar rails. GB-A-2 280 166 discloses a wheeled pallet assembly having a rectangular platform formed as a plastics moulding. DE-U-200 01 147 discloses a roller pallet for food or drink shops comprising a rectangular base part with wheels, two opposite side parts forming the side walls, and a folding shelf. The base and the sides are made of a plastic material.

The known trolleys are associated with various drawbacks that are more or less grave according to the specific use that is made of the trolleys. In particular, especially when they are intended to be used in the open, they call for accurate finishing treatments to avoid their surfaces becoming deteriorated due to the effect of the exposure to atmospheric agents. These treatments are relatively demanding in terms of cost and maintenance. In any case, the known trolleys are rather heavy on account of the characteristics of the employed materials and the quantity of materials necessary for assuring the robustness and rigidity of the structure.

The principal object of the present invention is to make available a base for a trolley and a trolley for the storage and transport of merchandise that will make it possible to avoid the drawbacks of the prior art, in particular trolleys that have a light structure and are yet rigid and do not call for particular surface treatments.

This and other objects are attained by realizing the base and the trolley defined in Claim 1 and, in particular preferred embodiments, in the dependent claims.

The invention will be more readily understood from the following detailed description, which is given by way of example and is not to be considered limitative in any way, the description making reference to the attached drawings, of which:
- Figure 1 shows the trolley in accordance with the invention as a perspective exploded view,
- Figures 2 and 3 show perspective views, respectively from above and below, of a base in accordance with the invention with four wheels already mounted,
- Figure 4 is a plan view from above of the base in accordance with Figures 2 and 3,
- Figure 5 is a section view along the line V-V of the base shown in Figure 4,
- Figure 6 is a view of a detail of the base in accordance with Figures 2 to 5 with one wheel mounted, and
- Figure 7 is a section view along the line VII-VII of the detail of Figure 6 with the mounted wheel.

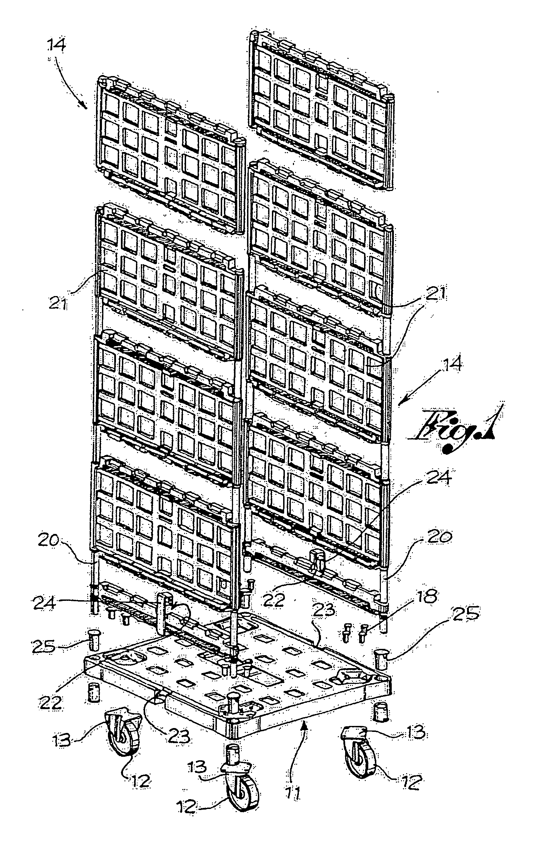

As can be seen in Figure 1, a trolley in accordance with the invention comprises a base 11 of a substantially quadrangular shape, four wheels 11 fixed to the base by means of respective stirrups 13 and two flanks 14 united with the base 11 along two opposite base sides.

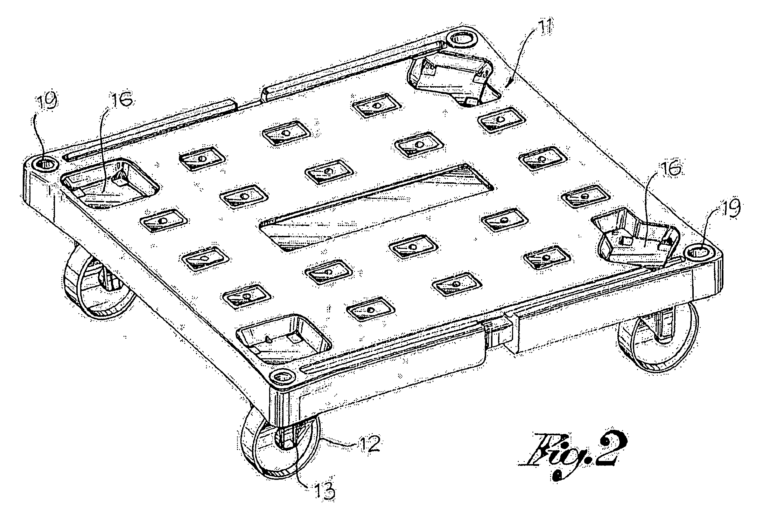

The base 11 is substantially constituted by a flattened hollow body of plastic material, high-density polyethylene for example, formed by means of a hot extrusion and blowing process. The blowing is performed in a mould shaped in such a manner as to form two thin principal walls that face each other and have reliefs facing towards the interior of the hollow body, as is shown in particular in Figures 2 to 5. In this example the reliefs are substantially of a boxlike shape with a flat end surface very close to the opposite wall. According to a variant, the mould may be configured in such a manner that the flat end surfaces arrive to touch the opposite wall and to become welded to it when the plastic material is still in the thermoplastic state.

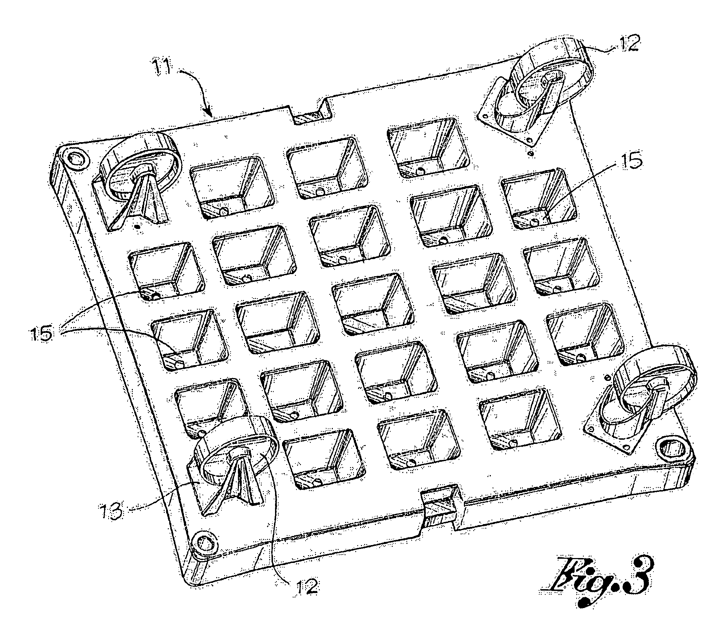

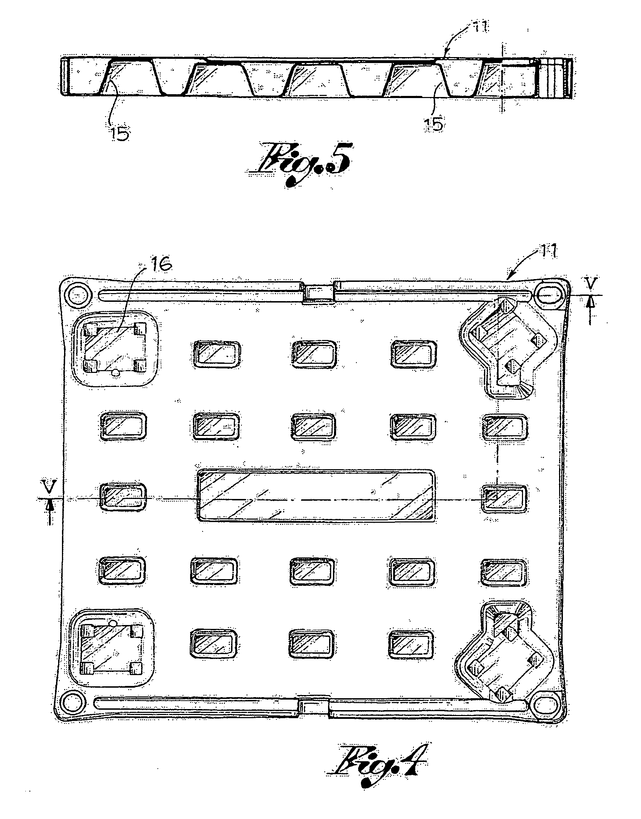

The reliefs, indicated by 15 in Figures 3 and 5, formed on the lower wall of the base, i.e. the face to which there will be fixed the stirrups with the wheels, are regularly arranged in such a manner as to constitute uniformly distributed support points for a load placed on the base. In this way one obtains a base that, thanks to the numerous reliefs that jointly and severally constitute a supporting surface, is rigid and, thanks to the small quantity of material utilized, is also light.

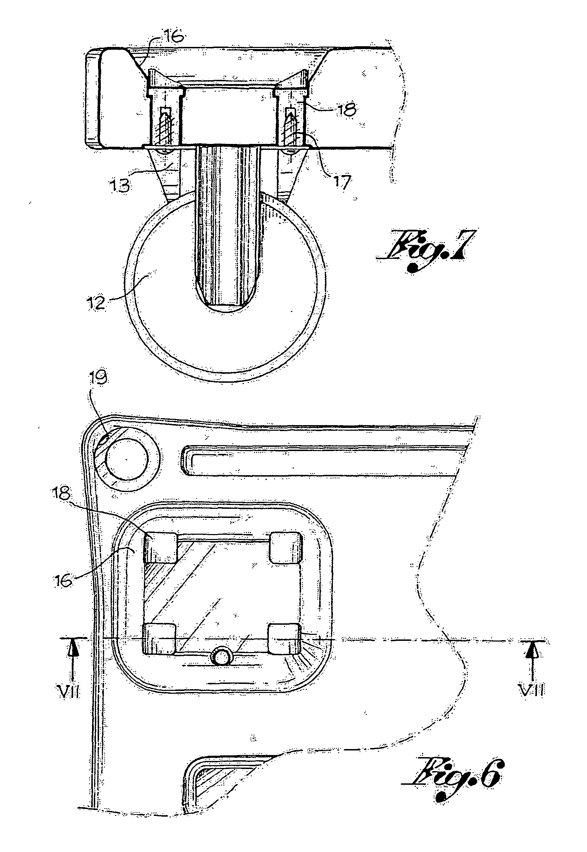

On the upper wall of the base in this example there are formed four reliefs, indicated by 16 in Figures 2 and 4 and likewise of boxlike shape, in proximity of the four corners of the base. These reliefs extend as far as the opposite wall in the positions of the mounting surfaces for the stirrups 13 of the wheels. The stirrups 13 are fixed to the base 11 by means of four self-threading screws 17 that pass through the two walls of the base and become engaged with corresponding cylindrical elements 18 arranged on the opposite wall, as is shown particularly in Figures 6 and 7.

Further reliefs are formed on one or the other of the two walls, or on both, in proximity of the corners of the base in such a manner as to form pairs of adjacent cup-like structures having the bases in common. The bases are at least partially removed after the blowing, thereby obtaining four through holes 19. In a particularly preferred embodiment, the trough holes are directly formed in the mould and have substantially cylindrical internal walls that define respective channels extending between the upper wall and the lower wall of the base 11.

In the shown example the side pieces 14 of the trolley are constituted by four rod-shaped uprights 20 inserted in the through holes 19 of the base and by panels 21, once again preferably formed by means of extrusion and blowing, each of which has two through holes that extend parallel to two opposite sides and are crossed by the uprights, as is shown by Figure 1. A trolley with side pieces formed in this manner is described in detail in the international application PCT/IT03/00800 filed on 5 December 2003 and entitled "Trolley panel".

The panels 21 are united with each other by means of joints provided on their edges perpendicular to the uprights. The lowest panel on each side piece in this particular example has a limited vertical extension and is shaped in such a manner as to provide a seating 22 that, together with a corresponding seating 23 provided on the base 11, serves to fix the side piece 14 to the base. For this purpose there are provided two elastic elements 24 that are shaped in such a manner as to be capable of being inserted by means of a snap fit into the above-described seatings and thus keeping the two side pieces attached to the base.

As is shown in Figure 1, in a non-limitative embodiment, collars 25, made of nylon for example, are fitted into the respective through holes 19 of the base 11. These collars serve to reduce the diameter of the holes in the cases in which, as in the illustrated example, the uprights have a section smaller than the section of the holes. This measure enhances the use versatility of the base. In a different and particularly preferred embodiment, in which the trough holes 19 are directly formed in the mould and have substantially cylindrical internal walls that define respective channels extending between the upper wall and the lower wall of the base 11, the uprights 20 are suitable to be inserted in respective holes 19 without the use of collars 25. More preferably, in this case two of four channels have a substantially circular section while the other two channels advantageously have a substantially slot-shaped section. The slot-shaped section channels are each provided on a respective side of the base in such a way that of the two uprights 20 supporting the same panel 21 one of said upright 20 is received in a circular section channel while the other one 20 is received in a slot-shaped section channel.

According to embodiments of the invention to be used in case merchandise sensitive to temperature leaps has to be stored and transported, the hollow body of the base is filled with a heat insulation material or with a eutectic solution of the same type as is usually utilized in the so-called eutectic plates.

According to another embodiment that can be used with advantage in case urgent or valuable merchandise has to be stored and transported, in the hollow body of the base there may be accommodated a satellite transmission system to ascertain the position of the trolley.
In a particularly advantageous embodiment, four regions of the hollow body 11 substantially corresponding to the four corners of the base are filled with a resin having the purpose of strengthening such corners. Preferably, such resin is injected in the base 11 after the blowing phase into respective cavities provided in the mould. More preferably such resin is a bicomponent resin. In a particularly preferred embodiment, such resin is an unsaturated polyester resin having a percentage of styrene comprised in the range 15% - 35% and more preferably comprised in the range 20% - 30%.

What has been said above makes it clear that the objects of the invention are fully attained. In fact, the trolley base in accordance with the invention is a light and at the same time robust structure that can be realized in an economic manner with automatic equipment and in a brief space of time. Furthermore, the hollow body of the base can be realized by utilizing plastic material, possibly capable of being recycled, that can readily be coloured with the desired shades and does not call for surface finishing and maintenance treatments.

Lastly, even though only one embodiment of the invention has been shown and described in detail, it is clear that many variants are possible within the ambit of the same inventive concept. For example, the reliefs formed on the walls of the base may also be very different in shape and number from the ones shown in order to satisfy particular functional and/or structural requirements, the surfaces of the base intended for the mounting of the wheel stirrups could be more or less than four and the means for fixing the side pieces to the base could be different from the ones shown and described. The trolley in accordance with the invention could likewise be different from the one described, always provided that it employs a base in accordance with the invention: the two side pieces, for example, could be realized by means of hot-welded steel wire or some other material and could also be more than two.

## Claims

1. A trolley for the storage and the transport of merchandise comprising:
- a base (11), comprising a hollow body (11) in plastic material obtained by means of an extrusion and blowing process, the hollow body comprising two walls that face each other with reliefs (15,16) towards the inside of the body, wherein the base is of substantially quadrangular shape having a mounting surface for a stirrup (13) as support for a wheel in proximity of each of its four corners, and wherein the base has four through holes (19), each of said through hole (19) being located in proximity of a respective corner of the base, and
- four rod-shaped uprights (20) inserted in the through holes (19) of the base and at least two side pieces (14) supported by the four uprights (20),
**characterised in that**
the side pieces (14) are formed by panels (21), each of which has two through holes that extend parallel to its two opposite sides for the passage of the respective uprights.

2. Trolley according to claim 1, in which said four holes (19) have substantially cylindrical internal walls that define respective channels, two said channels having a substantially circular section while the' other two of said channels having a substantially slot-shaped section.

3. Trolley according to claim 1, wherein the base comprises a collar (25) fitted into each of the through holes (19).

4. Trolley according to any one of the preceding claims, wherein the hollow body (11) is filled with a heat insulation material.

5. Trolley according to any one of Claims 1 to 4, wherein the hollow body (11) is filled with a eutectic solution.

6. Trolley according to any of the preceding claims, in which said base is of substantially quadrangular shape and in which four regions of the hollow body (11) substantially corresponding to the four corners of the base are filled with a resin having the purpose of strengthening such corners.

7. Trolley according to claim 6, wherein said resin is an unsaturated polyester resin.

8. Trolley according to claim 7, wherein said resin has a percentage of styrene comprised in the range 15% - 35%.

9. Trolley according to claim 8, wherein said resin has a percentage of styrene comprised in the range 20% - 30%.

10. A trolley in accordance with anyone of the preceding claims, comprising coupling means (22, 23, 24) between the base and the side pieces (14).

11. A trolley in accordance with claim 10, wherein the coupling means comprise an elastic element (24) associated with each side piece and shaped in such a manner as to become hooked onto the base (11) and the side piece (14) by means of a snap fit.

12. A trolley in accordance with any one of the preceding claims, wherein the panels (21) comprise a hollow body in plastic material obtained by means of extrusion and blowing.

## Patentansprüche

1. Wagen zum Lagern und für den Transport von Waren, umfassend:
- eine Basis (11), umfassend einen Hohlkörper (11) aus Kunststoff, hergestellt mittels eines Extrusions- und Blasverfahrens, wobei der Hohlkörper zwei einander zugewandte Wände mit zum Körperinneren gerichteten Vertiefungen (15, 16) umfasst, wobei die Basis eine im wesentlichen viereckige Form aufweist, die eine Montagefläche für einen Bügel (13) als Halterung für ein Rad in der Nähe jeder der vier Ecken hat, und wobei die Basis vier Durchbrüche (19) aufweist, wobei jeder Durchbruch (19) nächst einer jeweiligen Ecke der Basis vorgesehen ist, und
- vier stangenförmige Ständer (20), die in die Durchbrüche (19) der Basis eingeführt sind sowie zumindest zwei Seitenteile (14), die von den vier Ständern (20) gehalten werden,
**dadurch gekennzeichnet, dass**
die Seitenteile (14) durch Platten (21) gebildet werden, von denen jede zwei Durchbrüche aufweist, die sich parallel zu ihren zwei entgegengesetzten Seitenflächen für den Durchtritt der jeweiligen Ständer erstrecken.

2. Wagen nach Anspruch 1, bei dem die genannten vier Durchbrüche (19) im wesentlichen zylindrische Innenwände aufweisen, die entsprechende Kanäle definieren, wobei zwei der genannten Kanäle einen im wesentlichen kreisförmigen Querschnitt aufweisen, während die anderen zwei der genannten Kanäle einen im wesentlichen langlochförmigen Querschnitt haben.

3. Wagen nach Anspruch 1, wobei die Basis eine Hülse (25) umfasst, die in jedem der Durchbrüche (19) eingesetzt ist.

4. Wagen nach einem der vorhergehenden Ansprüche, wobei der Hohlkörper (11) mit einem wärmeisolierenden Material gefüllt ist.

5. Wagen nach einem der vorhergehenden Ansprüche 1 bis 4, wobei der Hohlkörper (11) mit einer eutektischen Lösung gefüllt ist.

6. Wagen nach einem der vorhergehenden Ansprüche, bei dem die genannte Basis eine im wesentlichen viereckige Form hat und bei dem vier Bereiche des Hohlkörpers (11), die im wesentlichen mit den vier Ecken der Basis korrespondieren, mit einem Harz gefüllt sind, das dem Zweck dient, diese Ecken zu verstärken.

7. Wagen nach Anspruch 6, wobei das genannte Harz ein ungesättigtes Polyesterharz ist.

8. Wagen nach Anspruch 7, wobei das genannte Harz einen Styrolanteil aufweist, der im Bereich von 15% - 35% liegt.

9. Wagen nach Anspruch 8, wobei das genannte Harz einen Styrolanteil aufweist, der im Bereich von 20% - 30% liegt.

10. Wagen nach einem der vorhergehenden Ansprüche, umfassend Verbindungsmittel (22, 23, 24) zwischen der Basis und den Seitenteilen (14).

11. Wagen nach Anspruch 10, wobei die Verbindungsmittel ein federelastisches Element (24) umfassen, das jedem Seitenteil zugeordnet ist und so geformt ist, dass es an der Basis (11) und dem Seitenteil (14) mittels Schnappverschluss eingehakt wird.

12. Wagen nach einem der vorhergehenden Ansprüche, wobei die Platten (21) einen Hohlkörper aus Kunststoff umfassen, der durch Extrusion und Blasverfahren hergestellt ist.

## Revendications

1. Chariot pour le stockage et le transport de marchandises, comprenant :
une base (11), comprenant un corps creux (11) en matière plastique obtenu par un procédé d'extrusion et de soufflage, le corps creux comportant deux parois mutuellement en regard avec des parties en retrait (15, 16) vers l'intérieur du corps, dans lequel la base est de forme sensiblement quadrangulaire présentant une surface de montage pour un étrier (13) servant de support pour une roue à proximité de chacun de ses quatre angles, et dans lequel la base comporte quatre trous de traversée (19), chacun des dits trous de traversée (19) étant situé à proximité d'un angle respectif de la base, et
quatre montants en forme de tige (20) insérés dans les trous de traversée (19) de la base, et au moins deux pièces latérales (14) supportées par les quatre montants (20),
**caractérisé en ce que**
les pièces latérales (14) sont formées par des panneaux (21) dont chacun comporte deux trous de traversée s'étendant parallèlement à ses deux côtés opposés, pour le passage des montants respectifs.

2. Chariot selon la revendication 1, dans lequel les dits quatre trous (19) ont des parois internes sensiblement cylindriques qui définissent des canaux respectifs, deux de ces canaux ayant une section sensiblement circulaire tandis que les deux autres canaux ont une section sensiblement oblongue.

3. Chariot selon la revendication 1, dans lequel la base comprend un manchon (25) emmanché dans chacun des trous de traversée (19).

4. Chariot selon une quelconque des revendications précédentes, dans lequel le corps creux (11) est rempli avec un matériau thermiquement isolant.

5. Chariot selon une quelconque des revendications 1 à 4, dans lequel le corps creux (11) est rempli avec une solution eutectique.

6. Chariot selon une quelconque des revendications précédentes, dans lequel la dite base est de forme sensiblement quadrangulaire et dans lequel quatre régions du corps creux (11) correspondant sensiblement aux quatre angles de la base sont remplies avec une résine dans le but de renforcer ces angles.

7. Chariot selon la revendication 6, dans lequel la dite résine est une résine polyester insaturée.

8. Chariot selon la revendication 7, dans lequel la dite résine contient un pourcentage de styrène compris dans la plage de 15% à 35%.

9. Chariot selon la revendication 8, dans lequel la dite résine contient un pourcentage de styrène compris dans la plage de 20% à 30%.

10. Chariot selon une quelconque des revendications précédentes, comprenant des moyens de couplage (22, 23, 24) entre la base et les pièces latérales (14).

11. Chariot selon la revendication 10, dans lequel les moyens de couplage comprennent un élément élastique (24) associé à chaque pièce latérale et configuré de manière à s'accrocher sur la base (11) et la pièce latérale (14) par enclenchement élastique.

12. Chariot selon une quelconque des revendications précédentes, dans lequel les panneaux (21) comprennent un corps creux en matière plastique obtenu par extrusion et soufflage.
